(19) Europäisches Patentamt
European Patent Office
Office européen des brevets

(11) Publication number: 0 357 193 A2

# (12) EUROPEAN PATENT APPLICATION

(21) Application number: 89306828.8

(22) Date of filing: 05.07.89

(51) Int. Cl.5: C08L 67/02 , C08K 5/29 , //(C08L67/02,101:00)

Claims for the following Contracting State: GR.

(30) Priority: 30.08.88 US 238300

(43) Date of publication of application: 07.03.90 Bulletin 90/10

(84) Designated Contracting States: AT BE CH DE ES FR GB GR IT LI LU NL SE

(71) Applicant: HOECHST CELANESE CORPORATION
Route 202-206 North
Somerville, N.J. 08876(US)

(72) Inventor: Golder, Michael D.
38 Harreton Road
Allendale New Jersey(US)

(74) Representative: De Minvielle-Devaux, Ian Benedict Peter et al
CARPMAELS & RANSFORD 43, Bloomsbury Square
London WC1A 2RA(GB)

## (54) Blends of copolyester elastomers carbodiimides and thermoplastic polymers.

(57) Elastomeric compositions having resistance to hot grease aging are made from a blend of a thermoplastic copolyester elastomer, a carbodiimide, and a thermoplastic polymer.

EP 0 357 193 A2

# BLENDS OF COPOLYESTER ELASTOMERS, CARBODIIMIDES AND THERMOPLASTIC POLYMERS

## Background of Invention

The field of art to which this invention is directed is modified thermoplastic copolyester elastomers.

Segmented thermoplastic copolyester elastomers, which contain recurring polymeric long chain ester units derived from phthalic acids and long chain glycols and short chain ester units derived from phthalic acids and short chain glycols, are described in such patents as U.S. 3,651,014, 3,763,109 and 4,355,155.

U.S. Patent No. 3,835,098 describes a process for improving the thermal and hydrolytic stability of copolyester elastomers by reacting the elastomer with substantially linear polycarbodiimides having an average of at least two carbodiimide groups per molecule.

Thermoplastic copolyester elastomer compositions having superior melt stability are described in U.S. Patent No. 3,723,568. The improved stability is obtained by blending the elastomer with low molecular weight epoxides having functionalities of not less than two.

Blends of copolyester elastomers, ethylene/carboxylic acid copolymers and polycarbodiimides are described in U.S. Patent No. 3,963,801.

In many applications, e.g., constant velocity boots used in front-wheel drive automobiles, there is a need for elastomeric compositions which can stand extended contact with hot grease without losing strength and elastomeric properties.

## Summary of Invention

This invention is directed to thermoplastic copolyester elastomer compositions having improved resistance to hot grease. This invention relates to thermoplastic copolyester elastomers, carbodiimides, and thermoplastic polymer blends.

The compositions of this invention are made from a blend of (A) about 70 to about 98.5 weight percent thermoplastic copolyester elastomer; (B) abcut 0.5 to about 5 weight percent carbodiimide and (C) about 1 to about 25 weight percent thermoplastic polymer, wherein said weight percentages are based on the total weight of (A), (B) and (C). The thermoplastic copolyester elastomer, which is also referred to as a segmented copolyester elastomer, is comprised of a multiplicity of recurring long chain ester units and short chain ester units joined head to tail through ester linkages. The long chain ester units are represented by the formula:

$$-OGO-\overset{\overset{O}{\|}}{C}-R-\overset{\overset{O}{\|}}{C}-$$

and the short chain ester units are represented by the formula:

$$-ODO-\overset{\overset{O}{\|}}{C}-R-\overset{\overset{O}{\|}}{C}-$$

wherein G is a divalent radical remaining after the removal of the terminal hydroxyl groups from a polyether glycol having a molecular weight in the range from about 400 to about 6,000, R is a hydrocarbon radical remaining after removal of the carboxyl groups from one or more aromatic dicarboxylic acids, and D is a divalent radical remaining after removal of hydroxyl groups from one or more aliphatic diols having 2 to 5 carbon atoms. The short chain ester units make up about 30 to about 85 weight percent of the copolyester.

The carbodiimides contain only one carbodiimide group per molecule and are represented by the formula:

$R^1N = C = NR^2$

wherein $R^1$ and $R^2$ are alkyl, cycloalkyl, and aryl groups.

The thermoplastic polymers are selected from the group consisting of phenoxy resins, methyl methacrylate-butadiene-styrene polymers, multistage polymers, hydrogenated styrene-butadiene block copolymers, ethylene-vinyl acetate copolymers and polypropylene having grafted thereon acrylic or methacrylic acid.

## Description of Invention

The thermoplastic copolyester elastomers useful in this invention are described in detail in U.S. Patent No. 4,355,155, which is hereby incorporated by reference. These elastomers are made up of a multiplicity of recurring long chain ester units and short chain ester units joined head to tail through ester linkages, said long chain ester units being represented by the formula:

$$-OGO-\overset{\overset{O}{\|}}{C}-R-\overset{\overset{O}{\|}}{C}-$$

and said short chain units being represented by the formula:

$$-ODO-\overset{\overset{O}{\|}}{C}-R-\overset{\overset{O}{\|}}{C}-$$

wherein G is divalent radical remaining after the removal of the terminal hydroxyl groups from a polyether glycol, wherein R is a hydrocarbon radicals remaining after removal of the carboxyl groups from one or more aromatic dicarboxylic acid, and wherein D is a divalent radical remaining after removal of hydroxyl groups from one or more aliphatic diols containing 2 to 5 carbon atoms.

The short chain segments in the elastomer amount to between about 30 percent and about 85 weight percent, preferably about 45 percent to about 65 weight percent, of the co-polyester.

The aliphatic diols useful in this invention contain 2 to 5 carbon atoms, examples of which are ethylene glycol, 1,3-propanediol, 1,4-butanediol, 1,4-butenediol, neopentyl glycol and 1,5-pentanediol. Mixtures of these diols can be used. The preferred diols are 1,4-butanediol or 1,4-butenediol or mixtures thereof. Preferably, between about 10 weight percent and about 40 weight percent, most preferably about 20 to about 30 weight percent, of the D groups in the above formula represent radicals remaining after removal of hydroxyl groups from 1,4-butenediol with the remainder being from 1,4-butanediol.

The long chain polyether glycols used to make the copolyester elastomers have a molecular weight between about 400 and about 6,000. Such polyether glycols are polyoxyalkylene glycols wherein the alkylene groups contain 2 to 4 carbon atoms. Examples of such polyether glycols are polyoxyethylene glycols, polyoxypropylene glycols and polyoxybutylene glycols or polyoxytetramethylene glycols. A preferred polyether glycol is polyoxytetramethylene glycol which is derived from tetrahydrofuran. A particularly preferred polyoxytetramethylene glycol is one having an average molecular weight of about 1,000.

The aromatic dicarboxylic acids useful in this invention contain two carboxylic groups attached to the aromatic ring and no other groups reactive with hydroxyl groups under esterification conditions. Examples of such acids are phthalic acid, isophthalic acid, terephthalic acid, the naphthalic acids, and diphenic acid. The preferred acids are terephthalic acid and isophthalic acid or mixtures thereof. Mixtures which contain terephthalic acid with about 1 percent to about 20 percent by weight of isophthalic acid are used when products of lower flexural modulus are desired.

The carbodiimides useful in this invention are monomeric having only one carbodiimide group per molecule, and are represented by the formula:

$R^1N = C = NR^2$

wherein $R^1$ and $R^2$ are alkyl groups containing from 1 to about 18 carbon atoms, cycloalkyl groups containing 5 to about 10 carbon atoms, and aryl groups, which term includes alkaryl and arylalkyl groups, containing 6 to about 18 carbon atoms. Examples of such carbodiimides are dimethyl carbodiimide, diisopropyl carbodiimide, diisobutyl carbodiimide, dioctyl carbodiimide, tert-butyl isopropyl carbodiimide, dodecyl isopropyl carbodiimide, dicyclohexyl carbodiimide, diphenyl carbodiimide, di-o-tolyl carbodiimide, bis(2,6-diethylphenyl) carbodiimide, bis(2,6-diisopropylphenyl) carbodiimide, di-B-naphthyl carbodiimide, benzyl isopropyl carbodiimide, and the like. Preferred carbodiimides are those wherein the R groups are aromatic. A particularly preferred carbodiimide is bis(2,6-diisopropylphenyl) carbodiimide. Carbodiimides are described in detail in "The Chemistry of Carbodiimides" by H.G. Khorana - Chemical Reviews Vol 3, pages 145-166 (1953), which is hereby incorporated by reference.

"Phenoxy resins" is the generic term used to described the amorphous, high molecular weight poly-(hydroxy ethers) derived from diphenols and epichlorohydrin. Phenoxy resins useful in this invention are the high molecular weight reaction products of Bisphenol A and epichlorohydrin. Such poly(hydroxy ether) reaction products have molecular weights which range from about 10,000 to about 35,000. Phenoxy resins are described in detail in "Encyclopedia of Polymer Science and Technology", Volume 10, pages 111-122-(1969) which is hereby incorporated by reference. Also included in the definition of phenoxy resins as used in this invention are the reaction products of Bisphenol A and epichlorohydrin which have molecular weights as low as about 5000. Such resins are sold commercially by Shell Chemical Company as Epon 1009 and 1010 and by Hi-Tek Polymers, Inc. as Epi-Rez 550 and 560. Phenoxy resins useful in this invention have molecular weights of about 5000 to about 35,000.

The methylmethacrylate-butadiene-styrene polymers useful in this invention are described in detail in U.S. Patent No. 4,304,709, which is hereby incorporated by reference. These polymers which are referred

to as MBS polymers, are prepared by the graft polymerization of methylmethacrylate, or a mixture thereof with a minor proportion of an ethylenically unsaturated comonomer copolymerizable with the methacrylate monomer, in the presence of a polybutadiene, or a butadiene-styrene trunk copolymer rubber, or by blending a methylmethacrylate-styrene copolymer with polybutadiene or a copolymer of butadiene. Examples of monomers copolymerizable with methylmethacrylate or butadiene are styrene and acrylonitrile. Preferably the MBS polymer is made from methyl methacrylate, 1,3-butadiene and styrene.

Multi-stage polymers useful in this invention are described in detail in U.S. Patent No. 4,034,013 which is hereby incorporated by reference. These multi stage polymers, which are also referred to as core-shell polymers, have a rubbery first stage, an epoxy group containing hard final stage, and have a minimum film forming temperature above 50° C. The first stage is polymerized from a monomer system which, if polymerized alone, would have a second order glass trans.i.tion temperature (Tg) below about 10° C. The first stage polymer is made from such monomers as butadiene or a $C_1$ to $C_{12}$ acrylate, e.g., ethylacrylate, butyl acrylate, and the like. The first stage polymer preferably contains a graft linking monomer, i.e., a monomer which contains both a highly reactive double bond and a double bond which is less reactive. The first stage polymer can also contain a small amount of a crosslinking monomer, e.g., 1,3-butylene diacrylate.

The final stage polymer, the shell, is made from monomers which, if polymerized alone, would have a Tg above 50° C. The major portion of monomers in the shell polymer are styrene and methyl methacrylate. The final stage polymer also contains epoxy functionality which can be derived from glycidyl methacrylate.

The multi-stage polymers are prepared by emulsion polymerization wherein each successive outer stage coats the previous stage polymer. The polymers are recovered from the emulsion by spray-drying or by coagulation.

The hydrogenated styrene-butadiene block copolymer resins are described in detail in U.S. Patent No. 4,242,470 which is hereby incorporated by reference. These block copolymers which are also referred to as styrene-ethylene-butylene copolymers (S-EB-S) contain polystyrene end blocks and a hydrogenated polybutadiene poly(ethylene-butylene) midblock.

The ethylene-vinyl acetate copolymers useful in this invention are described in Modern Plastics Encyclopedia 1988 on page 57, which is hereby incorporated by reference. These copolymers are made by basic low density polyethylene technology and contain from 5 to about 50 weight percent vinyl acetate and 50 to 95 weight percent ethylene.

The acrylic or methacrylic acid modified polypropylene useful in this invention contains about 1 to about 10 weight percent, preferably about 4 to about 8 weight percent, acrylic or methacrylic acid. Grafting to polypropylene can be conducted by extracting hydrogen ions from the polymer and reacting the polymer with the acrylic or methacrylic acid.

The compositions of this invention are made from a blend of (A) the thermoplastic polyester elastomer, (B) the carbodiimide, and (C) thermoplastic polymers selected from the group consisting of phenoxy resins, methyl methacrylate-butadiene-styrene polymers, multistage polymers, hydrogenated styrene-butadiene block copolymers, ethylene-vinyl acetate copolymers and acrylic or methacrylic acid modified polypropylene. The compositions contain about 70 to about 98.5 weight percent thermoplastic copolyester elastomer, about 0.5 to about 5 weight percent carbodiimide and about 1 to about 25 weight percent thermoplastic polymer. Preferably, the compositions will contain about 77 to about 96 weight percent thermoplastic polyester elastomer, about 1 to about 3 weight percent carbodiimide, and about 5 to about 20 weight percent thermoplastic polymer. The weight percents are based on the total weight of the three components, (A), (B) and (C).

In preparing the compositions of this invention, the copolyester elastomer, the carbodiimide, and the thermoplastic polymer are tumble blended, followed by melt compounding on single screw or twin screw extruders. The blends are then extruded in sheet form.

In some instances, the combination of the thermoplastic copolymer elastomer and the carbodiimide results in blooming of the carbodiimide from the extruded blend. Addition of the thermoplastic polymers reduces or eliminates the blooming phenomenon.

The following examples will describe the invention in more detail. Parts and percentages unless otherwise designated are parts and percentages by weight.

## Example A

The compositional data and the physical properties of the copolyester elastomers used in the examples

are shown in Table A.

TABLE A

| Copolyester | A | B | C |
|---|---|---|---|
| Shore D Hardness | 47 | 55 | 47 |
| Wt % Hard Segment | 53 | 62 | 53 |
| Wt % Soft Segment | 47 | 38 | 47 |
| Melting Point °C of Copolyester | 178 | 184 | 178 |
| Melt Index (220°C and 2160 Cm) | 6.0 | 6.0 | 11.5 |
| Inherent Viscosity | 1.35 | 1.35 | 1.0 |

All of the copolyesters contained both 1,4-butenediol ($B_2D$) and 1,4-butenediol ($B_1D$) in the hard segments in a mole ratio of $B_2D/(B_1D + B_2D) = 0.25$.

## Example 1

Copolyester Elastomers B described in Example A was tumble blended with bis(2,6-diisopropylphenyl) carbodiimide and a phenoxy resin (UCAR PKFE - Union Carbide Corporation). The blend was melt compounded in a one inch single screw extruder a 420°F and at 80 RPM and was extruded in sheet form. Resistance to hot grease aging was determined on ASTM D412 tensile bars stamped from the extruded sheet. The tensile bars were placed in jars filled with grease used in the front wheel drive systems of automobiles and were placed in ovens heated at 100°C for six weeks. The tensile strength at break (TS-BK) and the tensile elongation at break (ELONG-BK) were determined on the tensile bars before aging and after aging. The percent retention of these properties was then calculated. The amount of each component in the blend and the strength retention properties are listed in Table 1 at 1d. Comparative examples were made using only the copolyester elastomer (1a), the copolyester elastomer and the carbodiimide (1b), and the copolyester elastomer and the phenoxy resin (1c) following the same preparation and testing procedures used for 1d.

TABLE 1

| Example | 1a | 1b | 1c | 1d |
|---|---|---|---|---|
| Copolyester B% | 100 | 98 | 85 | 83 |
| Carbodiimide % | | 2 | | 2 |
| Phenoxy Resin % | | | 15 | 15 |
| 6 Weeks | | | | |
| % Retention-TS-BK | 41 | 46 | 54 | 60 |
| % Retention-Elong-BK | 12 | 65 | 32 | 89 |

## Example 2

Blends were prepared from copolyester elastomer, bis(2,6-diisopropylphenyl) carbodiimide and phenoxy resin (UCAR PKFE) using the procedure described in Example 1. The carbodiimide was introduced in admixture with polypropylene. The compositional data and aging results are listed in Table 2.

TABLE 2

| Example | 2a | 2b | 2c | 2d | 2e | 2f |
|---|---|---|---|---|---|---|
| Copolyester B% | 88 | 85.1 | 86.9 | 91.3 | 90.5 | 93.2 |
| Carbodiimide % | 2 | 2.6 | 0.5 | 0.5 | 1.8 | 3.1 |
| Phenoxy Resin % | 10 | 9.5 | 9.7 | 4.8 | 4.8 | 1.0 |
| Polypropylene | | 2.8 | 2.9 | 3.4 | 2.9 | 2.7 |
| 6 Weeks | | | | | | |
| % Retention - TS-BK | 51 | 78 | 48 | 41 | 44 | 71 |
| % Retention - Elong-BK | 89 | 105 | 49 | 27 | 68 | 105 |

## Example 3

Blends were prepared from copolyester elastomer, bis(2,6-diisopropylphenyl) carbodiimide and either phenoxy resin (UCAR PKFE) or epoxy resin (EPON 1009 - Shell Chemical Company). The compositional data and aging resistance are listed in Table 3. Examples 3a and 3e are comparative examples.

TABLE 3

| Example | 3a | 3b | 3c | 3d | 3e |
|---|---|---|---|---|---|
| Copolyester A% | 100 | 87.75 | 82.6 | 77.65 | 97.5 |
| Carbodiimide % | | 2.55 | 2.0 | 2.35 | 2.5 |
| Phenoxy Resin % | | 9.7 | | | |
| Epoxy Resin % | | | 15.4 | 20 | |
| 6 Weeks | | | | | |
| % Retention-TS-BK | 42 | 44 | 49 | 64 | 44 |
| % Retention-Elong-BK | 4 | 30 | 32 | 34 | 13.5 |

## Example 4

Blends were prepared from copolymer elastomer, bis(2,6-diisopropylphenyl) carbodiimide and thermoplastic polymers identified as follows:

PPAA Polypropylene modified with 6 percent acrylate acid
Kraton G1651 Hydrogenated styrene-butadiene copolymer obtained from Shell Oil Company
EVA Ethylene-vinyl acetate copolymer
MBS Methyl methacrylate-butadiene-styrene polymer (KM 653) obtained from Rohm & Haas Co.
KM330 Multi-stage copolymer obtained from Rohm & Haas Co.

The composition data and aging resistance are listed in Table 4. Examples 4a and 4e are comparative examples.

TABLE 4

| Example | 4a | 4b | 4c | 4d | 4e | 4f | 4g |
|---|---|---|---|---|---|---|---|
| Copolyester A | 100 | 87.8 | 87.8 | 87.8 | | | |
| Copolyester C | | | | | 100 | 80 | 80 |
| Carbodiimide | | 2.5 | 2.5 | 2.5 | | 2.2 | 2.2 |
| PPAA | | 9.7 | | | | | |
| Kraton G1651 | | | 9.7 | | | | |
| EVA | | | | 9.7 | | | |
| MBS | | | | | | 17.8 | |
| KM330 | | | | | | | 17.8 |
| Properties | | | | | | | |
| % Retention TS-BK | 48 | 49 | 64 | 56 | 44 | 74 | 73 |
| % Retention Elong-BK | 13 | 31 | 65 | 73 | 20 | 67 | 75 |

As can be seen from the data shown in Tables 1-4, the resistance of copolyester elastomers to hot grease is dramatically increased by modifying the elastomers with carbodiimides and thermoplastic polymers.

The principles, preferred embodiments and modes of operation of the present invention have been described in the foregoing specification. The invention which is intended to be protected herein, however, is not to be construed as limited to the particular forms disclosed, since these are to be regarded as illustrative rather than restrictive. Variations and changes may be made by those skilled in the art without departing from the spirit and scope of the invention.

## Claims

1. An elastomeric composition comprising a blend of:
(A) 70 to 98.5 weight percent thermoplastic copolyester elastomer;
(B) 0.5 to 5 weight percent of a carbodiimide; and
(C) 1 to 25 weight percent thermoplastic polymer, said weight percents being based on the total weight of (A), (B) and (C), wherein the copolyester elastomer comprises a multiplicity of recurring long chain ester units and short chain ester units joined head to tail through ester linkages, said long chain units being represented by the formula:

$$-OGO-\overset{O}{\overset{\|}{C}}-R-\overset{O}{\overset{\|}{C}}-$$

and said short chain units being represented by the formula:

$$-ODO-\overset{O}{\overset{\|}{C}}-R-\overset{O}{\overset{\|}{C}}-$$

wherein G is a divalent radical remaining after the removal of the terminal hydroxyl groups from a polyether glycol having molecular weight in the range of 400 to 6000, wherein R is a hydrocarbon radical remaining after removal of the carboxyl groups from an aromatic dicarboxylic acid, and wherein D is a divalent radical remaining after removal of hydroxyl groups from an aliphatic diol containing 2 to 5 carbon atoms, provided that said short chain segments amount to 30 to 85 percent by weight of the copolyester;
wherein the carbodiimide is represented by the formula:
$R^1N = C = NR^2$
wherein $R^1$ and $R^2$ are alkyl groups, cycloalkyl groups, or aryl groups; and
wherein the theroplastic polymer is selected from phenoxy resins, methyl methacrylate-butadiene-styrene polymers, multistage polymers, hydrogenated styrene-butadiene block copolymers, ethylene-vinyl acetate copolymers, and acrylic or methacrylic acid modified polypropylene.

2. The composition of Claim 1 wherein the aromatic dicarboxylic acid is terephthalic acid, isophthalic acid, or mixtures thereof, wherein the aliphatic diol is 1,4-butanediol or 1,4-butenediol or mixtures hereof and wherein the $R^1$ and $R^2$ substituents of the carbodiimide are alkyl groups containing 1 to 18 carbon atoms, cycloalkyl groups containing 5 to 10 carbon atoms, and aryl groups (which term includes alkaryl and arylalkyl groups) containing 6 to 18 carbon atoms.

3. The composition of Claim 1 or 2 wherein (A) is present in the amount of 77 to 96 weight percent, (B) is present in the amount of 1 to 3 weight percent, and (C) is present in the amount of 5 to 20 weight percent.

4. The composition of any of Claims 1-3 wherein the polyether glycol is a polyoxyalkylene glycol wherein the alkylene groups contain two to four carbon atoms.

5. The composition of Claim 4 wherein the polyether glycol is polyoxytetramethylene glycol having an average molecular weight of about 1000.

6. The composition of any of Claims 1-5 wherein the short chain segments amount to 45 percent to 65 percent by weight of the copolyester.

7. The composition of any of Claims 1-6 wherein 10 percent to 40 percent of the D groups represent divalent radicals remaining after removal of hydroxyl groups from 1,4-butenediol.

8. The composition of any of Claims 1-6 wherein 20 percent to 30 percent cf the D groups represent divalent radicals remaining after removal of hydroxyl groups from 1,4-butenediol.

9. The composition of any of Claims 1-8 wherein the R groups are hydrocarbon radicals remaining after the removal of carboxyl groups from terephthalic acid.

10. The composition of any of Claims 1-8 wherein 1 to 20 percent of R groups are hydrocarbon radicals remaining after removal of the carboxyl groups from isophthalic acid.

11. The composition of any of Claims 1-10 wherein the $R^1$ and $R^2$ substituents on the carbodiimide are aromatic groups.

12. The composition of Claim 11 wherein the carbodiimide is bis(2,6-diisopropylphenyl) carbodiimide.

13. The composition of any of Claims 1-12 wherein the thermoplastic polymer is a phenoxy resin.

14. The composition of Claim 13 wherein the phenoxy resin is the reaction product of Bisphenol A and epichlorohydrin having a molecular weight of 5,000 to 35,000.

Claims for the following Contracting State: GR

1. A process for the production of an elastomeric composition comprising forming a blend of:
(A) 70 to 98.5 weight percent thermoplastic copolyester elastomer;
(B) 0.5 to 5 weight percent of a carbodiimide; and
(C) 1 to 25 weight percent thermoplastic polymer, said weight percents being based on the total weight of (A), (B) and (C), wherein the copolyester elastomer comprises a multiplicity of recurring long chain ester units and short chain ester units joined head to tail through ester linkages, said long chain units being represented by the formula:

$$-OGO-\overset{O}{\overset{\|}{C}}-R-\overset{O}{\overset{\|}{C}}-$$

and said short chain units being represented by the formula:

$$-ODO-\overset{O}{\overset{\|}{C}}-R-\overset{O}{\overset{\|}{C}}-$$

wherein G is a divalent radical remaining after the removal of the terminal hydroxyl groups from a polyether glycol having molecular weight in the range of 400 to 6000, wherein R is a hydrocarbon radical remaining after removal of the carboxyl groups from an aromatic dicarboxylic acid, and wherein D is a divalent radical remaining after removal of hydroxyl groups from an aliphatic diol containing 2 to 5 carbon atoms provided that said short chain segments amount to 30 to 85 percent by weight of the copolyester;
wherein the carbodiimide is represented by the formula:

$$R^1N = C = NR^2$$

wherein $R^1$ and $R^2$ are alkyl groups, cycloalkyl groups, or aryl groups; and
wherein the thermoplastic polymer is selected from phenoxy resins, methyl methacrylate-butadiene-styrene polymers, multistage polymers, hydrogenated styrene-butadiene block copolymers, ethylene-vinyl acetate copolymers, and acrylic or methacrylic acid modified polypropylene.

2. The process of Claim 1 wherein the aromatic dicarboxylic acid is terephthalic acid, isophthalic acid, or mixtures thereof, wherein the aliphatic diol is 1,4-butanediol or 1,4-butenediol or mixtures hereof and wherein the $R^1$ and $R^2$ substituents of the carbodiimide are alkyl groups containing 1 to 18 carbon atoms, cycloalkyl groups containing 5 to 10 carbon atoms, and aryl groups (which term includes alkaryl and arylalkyl groups) containing 6 to 18 carbon atoms.

3. The process of Claim 1 or 2 wherein (A) is present in the amount of 77 to 96 weight percent, (B) is present in the amount of 1 to 3 weight percent, and (C) is present in the amount of 5 to 20 weight percent.

4. The process of any of Claims 1-3 wherein the polyether glycol is a polyoxyalkylene glycol wherein the alkylene groups contain two to four carbon atoms.

5. The process of Claim 4 wherein the polyether glycol is polyoxytetramethylene glycol having an average molecular weight of about 1000.

6. The process of any of Claims 1-5 wherein the short chain segments amount to 45 percent to 65 percent by weight of the copolyester.

7. The process of any of Claims 1-6 wherein 10 percent to 40 percent of the D groups represent divalent radicals remaining after removal of hydroxyl groups from 1,4-butenediol.

8. The process of any of Claims 1-6 wherein 20 percent to 30 percent of the D groups represent divalent radicals remaining after removal of hydroxyl groups from 1,4-butenediol.

9. The process of any of Claims 1-8 wherein the R groups are hydrocarbon radicals remaining after the removal of carboxyl groups from terephthalic acid.

10. The process of any of Claims 1-8 wherein 1 to 20 percent of R groups are hydrocarbon radicals remaining after removal of the carboxyl groups from isophthalic acid.

11. The process of any of Claims 1-10 wherein the $R^1$ and $R^2$ substituents on the carbodiimide are aromatic groups.

12. The process of Claim 11 wherein the carbodiimide is bis(2,6-diisopropylphenyl) carbodiimide.

13. The process of any of Claims 1-12 wherein the thermoplastic polymer is a phenoxy resin.

14. The process of Claim 13 wherein the phenoxy resin is the reaction product of Bisphenol A and epichlorohydrin having a molecular weight of 5,000 to 35,000.

15. The process of any of Claims 1-14 wherein the blend is formed by tumble blending followed by melt compounding and extrusion in sheet form.